# EUROPEAN PATENT APPLICATION

(11) **EP 4 603 935 A1**
(43) Date of publication of application: **20.08.2025**
(21) Application number: 22961827.7
(22) Date of filing: 14.10.2022

(54) **MOVABLE PLATFORM, CHASSIS OF MOVABLE PLATFORM AND CONTROL METHOD THEREOF, AND STORAGE MEDIUM**

(71) Applicant: SZ Shanzhi Technology Co., Ltd., Shenzhen, Guangdong 518000 (CN)
(72) Inventor: YU, Xiaobin, Shenzhen, Guangdong 518000 (CN); ZHANG, Zhipeng, Shenzhen, Guangdong 518000 (CN); HOU, Haonan, Shenzhen, Guangdong 518000 (CN); BAO, Yuqi, Shenzhen, Guangdong 518000 (CN)
(74) Representative: Appelt, Christian W.
(86) International application number: PCT/CN2022/125536
(87) International publication number: WO 2024/077641

(57) **Abstract**

A movable platform is provided, including: a body, a wheel assembly, a control device, and an actuator, the actuator and the wheel assembly are movably connected to the body, the wheel assembly is used for rolling operations in a target area at the bottom of the body, and the control device is configured to, in response to a trigger command, control the wheel assembly to exit the target area and control the actuator to enter the target area. This application enhances the operational flexibility of the movable platform and improves the overall operational stability of the platform. It also provides a chassis for the movable platform, a control method thereof, and a storage medium.

## Description

### Technical Field

This application relates to the field of movable platforms, particularly to a movable platform, a chassis of the movable platform, a control method thereof, and a storage medium.

### Background Art

To meet the operational needs of multiple scenarios, the structural design of a movable platform is often constrained by boundary conditions. In some scenarios, a movable platform needs to store goods, such as in logistics distribution or catering services. The movable platform must pass through narrow passages, such as elevators or gate machines, which restrict its overall length and width. However, when the structural design meets the requirements of multi-scenario operations, the control of the movable platform becomes less flexible, and its operational stability is suboptimal.

### Summary of the Invention

Based on this, the present application provides a movable platform, a chassis of a movable platform, a control method thereof, and a storage medium, aiming to address the technical issue of improving the operational flexibility of the movable platform.

In a first aspect, some embodiments of the present application provide a movable platform, which includes:
a body, a wheel assembly, a control device, and an actuator, where
the actuator and the wheel assembly are movably connected to the body;
the wheel assembly is configured to roll and operate in a target area at a bottom of the body;
the control device is configured to respond to a trigger command, controlling the wheel assembly to exit the target area and controlling the actuator to enter the target area.

In a second aspect, some embodiments of the present application provide a chassis of a movable platform, which includes:
a chassis body, a wheel assembly, and a wheel assembly control device, where
the chassis body is configured to support an actuator of the movable platform;
the wheel assembly is movably connected to the chassis body, in a first working state, all or part of the wheel assembly is located in an outer area of a side surface of the chassis body, in a second working state, the wheel assembly is away from the outer area of the side surface;
the wheel assembly control device is configured to, in response to a trigger command, control the wheel assembly to move from the first working state to the second working state, so that the actuator moves to the outer area.

In a third aspect, some embodiments of the present application provide a control method for a chassis of a movable platform, which includes:
a chassis body, a wheel assembly, and a wheel assembly control device;
the chassis is configured to support an actuator of the movable platform;
the wheel assembly is movably connected to the chassis body, in a first working state, all or part of the wheel assembly is located in an outer area of a side surface of the chassis body, in a second working state, the wheel assembly is away from the outer area of the side surface;
the method includes:
   in response to a trigger command, where the trigger command is generated based on the actuator about to move to the outer area of the side surface, the wheel assembly control device controlling the wheel assembly to move from the first working state to the second working state, so as to allow the actuator to enter the outer area of the side surface.

In a fourth aspect, some embodiments of the present application provide a chassis of a movable platform, which includes:
a load-bearing part, configured to connect a load part of the movable platform;
a drive wheel assembly, capable of driving the movable platform to perform a variable-speed motion in a traveling direction;
a supporting wheel assembly;
a connecting device, arranged between the load-bearing part and the supporting wheel assembly;
the connecting device is configured to, in response to the movable platform entering a variable-speed motion state in the traveling direction, increase a rigidity between the load-bearing part and the supporting wheel assembly.

In a fifth aspect, some embodiments of the present application provide a control method for a chassis of a movable platform, which includes:
a load-bearing part, configured to connect a load part of the movable platform;
a drive wheel assembly, capable of driving the movable platform to perform a variable-speed motion in a traveling direction;
a supporting wheel assembly;
a connecting device, arranged between the load-bearing part and the supporting wheel assembly;
the method includes:
   in response to the movable platform entering a variable-speed motion state in the traveling direction, controlling the connecting device to increase a rigidity between the load-bearing part and the supporting wheel assembly.

In a sixth aspect, some embodiments of the present application provide a movable platform, which includes: the chassis according to any one of the embodiments of the disclosures of the present application.

In a seventh aspect, some embodiments of the present application provide a computer-readable storage medium, the computer-readable storage medium stores a computer program, which, when executed by a processor, implements the steps of the control method according to any one of the embodiments of the disclosures of the present application.

This application provides a movable platform, a chassis of a movable platform, a control method thereof, and a storage medium. The movable platform includes a body, a wheel assembly, a control device, and an actuator. The actuator and the wheel assembly are movably connected to the body. The wheel assembly is configured to perform rolling operations within a target area at the bottom of the body. The control device is configured to respond to trigger commands, control the wheel assembly to exit the target area, and control the actuator to enter the target area. The movable platform provided in herein dynamically adjusts the movable platform spatial occupation of the target area by flexibly adjusting the positions of the wheel assembly and the actuator. This improves the operational flexibility of the movable platform and enhances the overall operational stability of the platform.

It should be understood that the above general description and the detailed descriptions that follow are merely exemplary and explanatory, and do not limit the scope of disclosure of the embodiments of this application.

### Brief Description of the Drawings

To more clearly illustrate the technical solutions of the embodiments of this application, a brief introduction to the drawings used in the description of the embodiments is provided below. It is evident that the drawings described below pertain to some embodiments of this application. For a person skilled in the art, additional drawings may be obtained based on these drawings without requiring inventive effort.
FIG. 1 is a perspective view of a movable platform according to some embodiments of this application;
FIG. 2 is a perspective view of a movable platform according to some embodiments of this application;
FIG. 3A is a side view of a chassis of a movable platform according to some embodiments of this application;
FIG. 3B is a front view of the chassis of a movable platform shown in FIG. 3A;
FIG. 3C is a bottom view of the chassis of a movable platform shown in FIG. 3A;
FIG. 3D is a top view of the chassis of a movable platform shown in FIG. 3A;
FIG. 4 is a perspective view of a control device according to some embodiments of this application;
FIG. 5 is a structural schematic view of a load part of a movable platform according to some embodiments of this application;
FIG. 6 is a structural schematic view of an actuator according to some embodiments of this application;
FIG. 7 is a structural schematic view of a connecting device according to some embodiments of this application;
FIG. 8A is a perspective view of a supporting assembly according to some embodiments of this application;
FIG. 8B is a side view of the supporting assembly shown in FIG. 8A;
FIG. 8C is an exploded perspective view of the supporting assembly shown in FIG. 8A;
FIG. 9A is a structural schematic view of a telescopic connector according to some embodiments of this application;
FIG. 9B is a structural schematic view of another telescopic connector according to some embodiments of this application;
FIG. 10A is a schematic view of an operating state of the supporting assembly shown in FIG. 8A;
FIG. 10B is a schematic view of another operating state of the supporting assembly shown in FIG. 8A; and
FIG. 11 is a structural schematic view of a contact sensor according to some embodiments of this application.

Reference numerals: In the figures,
Movable platform 100, body 10, load part 50, chassis 20, actuator 30, contact sensor 40, chassis body 21, control device 22, wheel assembly 23, drive wheel assembly 24, supporting wheel assembly 25, connecting device 26, load-bearing part 27, other wheel assembly 28, telescopic mechanism 221, item carrying platform 11, receiving part 31, lifting mechanism 32, supporting assembly 261, elastic member 262, telescopic connector 263, fluid accommodating chamber 2631, valve 2632, communication pipe 2633, connecting rod 2634

### Description of the Embodiments

The following will provide a clear and complete description of the technical solutions in the embodiments of this application, in conjunction with the accompanying drawings. It is evident that the described embodiments are part of the embodiments of this application, not all of them. Based on the embodiments of this application, all other embodiments that a person skilled in the art can derive without requiring inventive effort are within the scope of protection of this application.

It should be noted that when a component is referred to as being "fixed to" another component, it can be directly mounted on the other component or may involve an intermediate component. When a component is said to be "connected to" or "coupled with" another component, it can be directly connected to the other component or may involve an intermediate component, and in some cases, the two components may be integrally formed. When a component is referred to as being "arranged on" another component, it can be directly placed on the other component or may also involve an intermediate component.

Unless otherwise defined, all technical and scientific terms used herein have the same meaning as understood by those skilled in the relevant technical field. The terms used in the description of the embodiments of the present invention are merely for the purpose of describing specific embodiments and are not intended to limit the invention. The term "and/or" used herein includes any and all combinations of one or more of the listed items.

In addition, the directional terms such as "up," "down," "front," and "back" used in this embodiment are referenced based on the conventional operating posture of the chassis or the movable platform and should not be considered as limiting.

The following provides a detailed description of some embodiments of the present invention in conjunction with the accompanying drawings. Where there is no conflict, the following embodiments and features in the embodiments can be combined with each other.

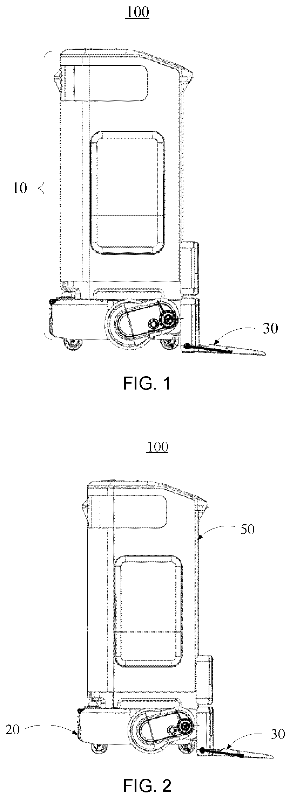

With reference to FIG. 1, FIG. 1 illustrates a movable platform 100 provided in some embodiments of the present application, including a body 10 and an actuator 30.

In some embodiments, as shown in FIG. 2, which illustrates a movable platform 100 provided in some embodiments of the present application. The body 10 may include a load part 50 and a chassis 20, with the load part 50 positioned above the chassis 20 and connected to the actuator 30. In some embodiments, the body may be integrally formed with the load part 50 and the chassis 20. In some embodiments, the body 10 may include the load part 50, the chassis 20, and a connecting part for connecting the load part 50 and the chassis 20.

Optionally, the movable platform 100 proposed in the embodiments of the present application is specifically one of a transport robot, a delivery robot, or a food delivery robot. Exemplarily, the movable platform 100 of the present application is suitable for logistics and distribution, including but not limited to item handling, express delivery, and automated food delivery. In traditional designs, the movable platform 100 is equipped with drive wheels and driven wheels; however, the driven wheels do not have any additional motion design. Due to the overall structural limitations of the movable platform 100, there are operational stability issues during task execution.

The movable platform 100 of the present application addresses the existing operational stability issues through a reasonable wheel layout and motion control design.

With reference to FIG. 1 to 11, the movable platform 100 provided in the embodiments of the present application includes a body 10, a wheel assembly 23, a control device 22, and an actuator 30. The actuator 30 and the wheel assembly 23 are movably connected to the body 10. The wheel assembly 23 is configured to perform rolling operations in a target area under the body 10. The control device 22 is configured to respond to a trigger command by controlling the wheel assembly 23 to exit the target area and controlling the actuator 30 to enter the target area.

It is worth mentioning that, to achieve a highly integrated movable platform 100, various actuators may be mounted on the platform, such as a transport platform, a robotic arm, and a human-machine interaction module. These actuators 30 need to move within space to accomplish their operational objectives, such as picking and placing goods (items) or interacting with users. Since the wheel assembly 23 performs rolling operations in the target area on the body 10, it is necessary to some extent to restrict the actuator 30 from entering this target area to reduce interference with the wheel assembly 23. However, such a restriction would reduce the operational flexibility of the actuator 30.

The movable platform 100 provided in the embodiments of the present application improves operational flexibility and overall stability by dynamically adjusting the positions of the wheel assembly 23 and the actuator 30. This enables the movable platform 100 to flexibly manage space occupation in the target area, reducing operational disruptions caused by positional conflicts and broadening its applicability.

In some embodiments, controlling the actuator 30 to enter the target area includes moving the actuator 30 into the target area and performing a work task.

In some embodiments, the wheel assembly 23 is controlled to avoid the actuator 30. Otherwise, when the actuator 30 moves into the target area, mechanical interference may occur with the wheel assembly 23, affecting the operation of both the actuator 30 and the wheel assembly 23.

When the wheel assembly 23 operates in the target area, its support points form a supporting surface for the movable platform 100, providing effective support and ensuring the stability of the movable platform 100. After the wheel assembly 23 exits the target area, its support points change or disappear, correspondingly reducing the stability of the movable platform 100.

In some embodiments, the control device 22 is configured to control the wheel assembly 23 to enter the target area in response to the actuator 30 exiting the target area.

Optionally, the control device 22 is configured to control the wheel assembly 23 to enter the target area in response to a change in the movement state of the movable platform 100.

In some embodiments, the movable platform 100 includes additional wheel assemblies 28. When the wheel assembly 23 is in the target area, the wheelbase between the wheel assembly 23 and the other wheel assemblies 28 is greater than when the wheel assembly 23 exits the target area.

In some embodiments, the other wheel assemblies 28 are drive wheels, while the wheel assembly 23 is a driven wheel.

In some embodiments, the rotation axis of the other wheel assemblies 28 is positioned closer to the projection of the center of gravity of the movable platform 100 on the bottom surface of the body 10 compared to the rotation axis of the wheel assembly 23.

In some embodiments, the other wheel assemblies 28 include a first wheel assembly and a second wheel assembly, which are located on opposite sides of the body 10. The wheel assembly 23 includes a third wheel assembly, which is positioned on the extended normal line of the center of the rotation axis between the first wheel assembly and the second wheel assembly.

In some embodiments, the target area includes the surrounding outer area at the bottom of the body 10. Optionally, the surrounding outer area at the bottom of the body 10 may be the outer area of the chassis body 21 in the forward direction of the chassis 20 or the outer area of the chassis body 21 in the backward direction of the chassis 20.

In some embodiments, controlling the wheel assembly 23 to exit the target area includes moving the wheel assembly 23 inward toward the side of the bottom of the body 10 (move inward a side surface of the bottom of the body 10).

In some embodiments, the wheel assembly 23 is connected to the body 10 through a telescopic mechanism 221, and the control device 22 is configured to adjust the extension length of the telescopic mechanism 221 to drive the wheel assembly 23 inward toward a side surface of the bottom of the body 10 (move inward a side surface of the bottom of the body 10).

In some embodiments, the actuator 30 can move from top to bottom along the body 10 to the target area.

In some embodiments, the body 10 includes a storage compartment, and the actuator 30 is used to retrieve items placed in the storage compartment and move the carried items to the target area.

In some embodiments, moving the carried items to the target area is intended to place the items on the ground.

In some embodiments, the wheel assembly 23 and/or other wheel assemblies 28 of the movable platform 100 are connected to the body 10 via a connecting device 26. The connecting device 26 is configured to adjust the rigidity between the wheel assembly 23 and/or other wheel assemblies 28 of the movable platform 100 and the body 10.

In some embodiments, in response to the movable platform 100 entering a variable-speed motion state, the control device controls the connecting device 26 to increase the rigidity between the wheel assembly 23 and/or other wheel assemblies 28 of the movable platform 100 and the body 10; and/or in response to the movable platform 100 exiting the variable-speed motion state, the control device controls the connecting device 26 to reduce the rigidity between the wheel assembly 23 and/or other wheel assemblies 28 of the movable platform 100 and the body 10.

In some embodiments, the body 10 further includes a contact sensor, which is installed on the side surface of the body 10. The contact sensor is configured to detect contact with other objects and generate a trigger command for controlling the emergency braking of the movable platform 100 and/or issuing an alert.

For the movable platform 100 provided in the embodiments of the present application, when an object or a person touches the body 10, a trigger command is generated to control the emergency braking of the movable platform 100 and/or issue an alert. This ensures that the power system of the movable platform 100 performs an emergency stop and/or issues an alert, preventing harm to surrounding objects or nearby pedestrians during operation or movement.

Optionally, the contact sensor may include a pressure sensor. Optionally, the contact sensor is installed on the front measurement surface in the direction of travel of the body 10. Optionally, the contact sensor may be arranged on the left and right sides along a 45-degree diagonal direction, so that the area covered by the contact sensor encompasses both the front sides in the direction of travel and the left and right side areas. Optionally, the contact sensor is positioned at the outermost side.

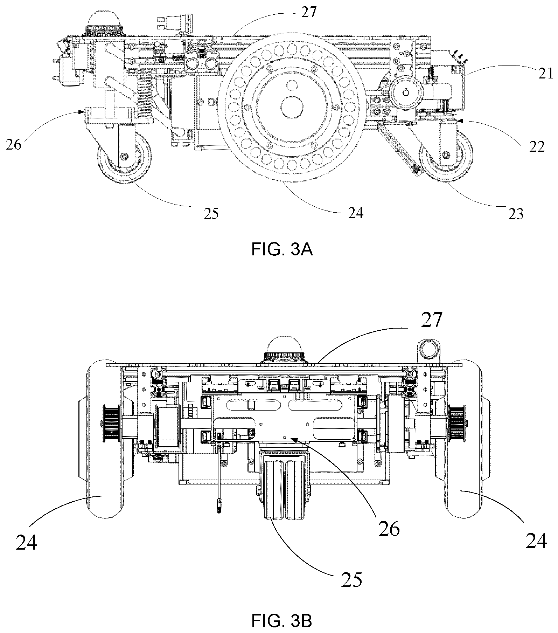

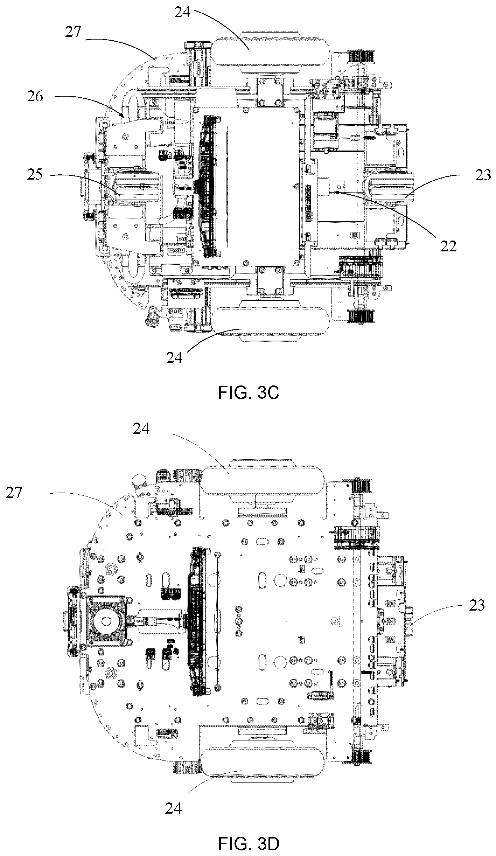

With reference to FIG. 2, and 3A-3D, the chassis 20 of the movable platform 100 provided in some embodiments of the present application includes a chassis body 21, a wheel assembly 23, and a control device 22. The chassis body 21 is used to support the actuator 30 of the movable platform 100. The wheel assembly 23 is movably connected to the chassis body 21. In a first working state, all or part of the wheel assembly 23 is located in the outer area of the chassis body 21. In a second working state, the wheel assembly 23 moves away from the outer area. The control device 22 is configured to respond to a trigger command and control the wheel assembly 23 to transition from the first working state to the second working state, enabling the actuator 30 to move to the outer area.

The chassis 20 of the movable platform 100 provided in the embodiments of the present application can dynamically adjust the space occupation of the chassis 20 by flexibly adjusting the position of the wheel assembly 23, based on the operational status of the actuator 30. This enhances the operational stability and task efficiency of the movable platform 100.

The wheel assembly 23 is the rear wheel in the forward direction of the chassis 20. It should be noted that the wheel assembly 23 is not limited to the installation position shown in the figures, and the number of wheels in the wheel assembly is not restricted.

Optionally, the wheel assembly 23 can adopt a dual-drag wheel setup, allowing the movable platform 100 to reduce rotational resistance when rotating in place through differential speed, making it easier for the movable platform 100 to spin autonomously.

Optionally, the side of the chassis body 21 may be the side of the chassis body 21 that faces the forward direction of the chassis 20, or it may be the side of the chassis body 21 that faces the backward direction of the chassis 20.

Exemplarily, the outer area of the side of the wheel assembly 23 away from the chassis body 21 includes the inner area of the side of the wheel assembly 23 moved to the chassis body 21. In some other embodiments, the outer area of the side of the wheel assembly 23 away from the chassis body 21 includes the surrounding area of the other side of the chassis body 21.

Optionally, the trigger command can be issued by the chassis 20 of the movable platform 100. In some embodiments, the trigger command can be issued by the movable platform 100.

The actuator 30 is away from the outer area of the side of the chassis body 21, and the wheel assembly 23 continues to work in the second working state. The movable platform 100 is prone to overturning due to backward tilting when accelerating or retreating. Optionally, the control device 22 is also used to respond to a trigger command, where the trigger command is generated based on the actuator 30 being away from the outer area of the side of the chassis body 21, and control the wheel assembly 23 to enter the first working state from the second working state to increase the area between the supporting points of the chassis 20 on the ground and improve the stability of the chassis 20. In the chassis 20 of the movable platform 100 provided in this embodiment, when the actuator 30 needs to descend to the ground, the wheel assembly 23 can avoid space for the actuator 30 without affecting the normal operating stability of the movable platform 100, and maintain the stability of the movable platform 100 during braking.

In some embodiments, in the first working state, the wheel assembly 23 partially or completely protrudes outward from the side surface of the chassis body 21. In the second working state, the wheel assembly 23 is stored inside the side surface of the chassis body 21. For example, when the need for increased stability of the chassis 20 is detected, the wheel assembly 23 can be set to work in the first working state. When it is detected that the chassis 20 is already stable and there is a need to reduce the footprint or avoid obstacles around the chassis 20, the wheel assembly can be set to work in the second working state.

The chassis 20 of the movable platform 100 provided in the embodiments of the present application allows the wheel assembly 23 to flexibly switch between the working state and the storage state according to different operational requirements. In the working state, the wheel assembly 23 protrudes outward from the side surface of the chassis body 21, increasing the area between the support points of the chassis 20 on the ground, thereby improving the stability of the chassis 20. In the storage state, the wheel assembly 23 is stored inside the side surface of the chassis body 21, reducing the space occupation of the chassis 20.

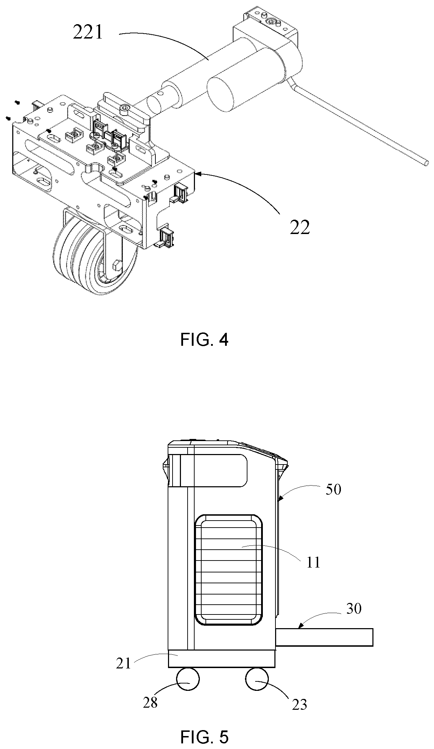

In some embodiments, as shown in FIG. 4, the control device 22 includes a telescopic mechanism 221. The wheel assembly 23 is connected to the chassis body 21 via the telescopic mechanism 221. The control device 22 is configured to control the telescopic length changes of the telescopic mechanism 221 to adjust the position of the wheel assembly 23, moving it away from the outer area.

Optionally, the telescopic mechanism 221 includes an electric push rod. It should be understood that, in other embodiments, the telescopic mechanism 221 may include a drive system capable of driving the wheel assembly 23 to move back and forth. The drive system can operate using electric, pneumatic, or hydraulic power.

In some embodiments, as shown in FIG. 5, the movable platform 100 includes a load part 50, which is connected to the actuator 30. The load part 50 further includes multiple item carrying platforms 11 arranged along the height direction. The control device 22 is also configured to adjust the position of the wheel assembly 23 based on the weight distribution of the item on the multiple item carrying platforms 11, in order to change the wheelbase between the wheel assembly 23 and other wheel assemblies 28 of the chassis 20. Additionally, the actuator 30 can move vertically along the height direction. The control device 22 is also configured to adjust the position of the wheel assembly 23 based on the height of the actuator 30, thereby changing the wheelbase between the wheel assembly 23 and other wheel assemblies 28 of the chassis 20.

The chassis 20 of the movable platform 100 provided in the embodiments of the present application can automatically adjust the position of the wheel assembly 23 based on the load distribution of the movable platform 100 and/or the height of the actuator 30. By changing the wheelbase, the operational stability of the movable platform 100 is improved.

It should be noted that other wheel assemblies 28 are not limited to the installation position shown in the figure. Other wheel assemblies 28 can be any other wheel assembly connected to the chassis body 21, except for the wheel assembly 23. For example, in some other embodiments, other wheel assemblies 28 can be passive wheel assemblies or drive wheel assembly 24.

Optionally, the actuator 30 is used to automatically transfer items located outside the movable platform 100 to the item carrying platform 11, or to automatically transfer the item from the item carrying platform 11 to outside the movable platform 100. The multiple item carrying platforms 11 arranged along the height direction facilitate the storage of goods. For example, the load part 50 may be configured with one or more compartments, and by setting multiple compartments, multiple goods can be stored, improving delivery efficiency.

Optionally, when the weight distribution of the item carried on the item carrying platform 11 is towards the upper part along the height direction, the wheel assembly 23 is adjusted to extend outward from the side of the chassis body 21. This increases the wheelbase between the wheel assembly 23 and other wheel assemblies 28 of the chassis 20, enlarging the area between the support points of the chassis 20 on the ground. This helps to reduce the risk of tipping caused by a higher center of gravity during operation, enhancing the operational stability of the movable platform 100.

Optionally, when the actuator 30 rises along the height direction and exceeds a first preset height condition, the wheel assembly 23 is adjusted to extend outward from the side of the chassis body 21. This increases the wheelbase between the wheel assembly 23 and other wheel assemblies 28 of the chassis 20, enlarging the area between the support points of the chassis 20 on the ground. This helps to reduce the risk of tipping caused by a higher center of gravity during operation, enhancing the operational stability of the movable platform 100.

Optionally, when the actuator 30 descends along the height direction and exceeds a second preset height condition, the wheel assembly 23 is adjusted to retract inward the side surface of the chassis body 21 (retracted inward the side surface the chassis body 21). This allows the actuator 30 to smoothly descend to the ground for unloading or picking up item.

In some embodiments, the other wheel assembly 28 is configured to drive the movable platform 100 to move in the travel direction, and the wheel assembly 23 is positioned in this travel direction, close to the edge of the chassis body 21.

Optionally, the other wheel assembly 28 may be a drive wheel assembly 24. Optionally, the drive wheel assembly 24 includes two powered hub motors, which enable the drive wheel assembly 24 to achieve multi-directional movement through differential drive. Optionally, the drive wheel assembly 24 is positioned along the central axis of the movable platform 100, ensuring that the movable platform 100 can rotate in place within a preset size range, without occupying external space, allowing for on-the-spot rotation. Optionally, the wheel assembly 23 is positioned near the front or rear side of the chassis body 21 in the travel direction.

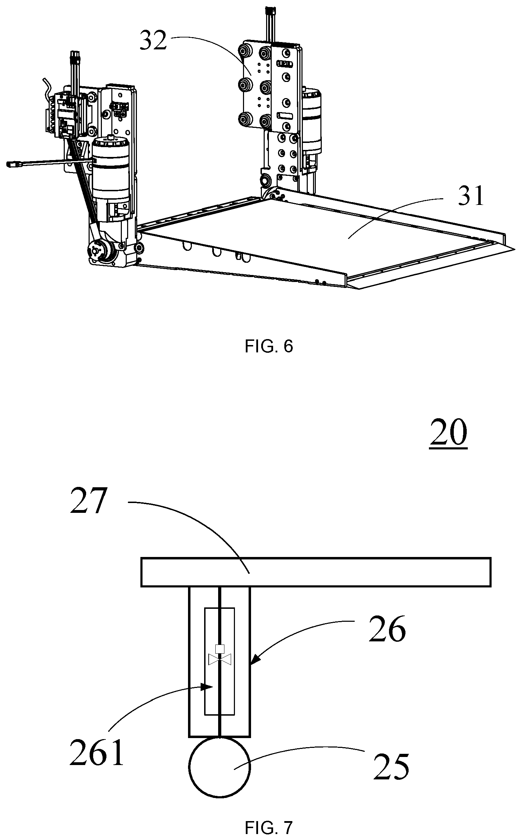

As shown in FIG. 6, the actuator 30 includes a receiving part 31 and a lifting mechanism 32. The receiving part 31 extends outward from the load part 50 and is used for picking up and placing goods. The lifting mechanism 32 connects the receiving part 31 to the load part 50 and can drive the receiving part 31 to move vertically.

Optionally, the lifting position of the receiving part 31 is detected, and when the receiving part 31 is about to move to the outer area of the chassis body 21, a trigger command is generated to control the wheel assembly 23 to switch from the first working state to the second working state, so as to avoid interference with the actuator 30.

For example, the lifting mechanism 32 can use a drive motor to drive a lead screw nut drive, chain drive, belt drive, or any other type of drive system to vertically move the receiving part 31. The lifting mechanism 32 allows the receiving part 31 to move up and down, making it convenient to transfer goods to the corresponding position when the load part 50 has multiple item carrying platforms 11.

It should be noted that the actuator 30 is not limited to the methods described above. For example, in other embodiments, the actuator 30 may include a mechanical arm that extends outward from the load part 50, and the mechanical arm can move vertically.

The movable platform 100 in this application, through a reasonable chassis 20 wheel assembly layout and motion control design, addresses the operational stability issues currently present in movable platforms 100. Specifically, the rigidity of the chassis 20 of the movable platform 100 can be adaptively adjusted, which improves the stability of the platform's operational posture under the force conduction effect. This effectively solves the issues in the prior art where movable platforms 100 have limited maneuverability in complex environments and cannot control brake pitching.

As shown in FIG. 1 to 7, the chassis 20 of the movable platform 100 provided in this application includes a load-bearing part 27, a drive wheel assembly 24, a supporting wheel assembly 25, and a connecting device 26. The load-bearing part 27 is used to connect the load part 50 of the movable platform 100. The drive wheel assembly 24 is capable of driving the movable platform 100 to perform variable-speed movement in the travel direction. The connecting device 26 is positioned between the load-bearing part 27 and the supporting wheel assembly 25, and is configured to increase the rigidity between the load-bearing part 27 and the supporting wheel assembly 25 in response to the movable platform 100 entering a variable-speed motion state in the travel direction.

In some embodiments, the supporting wheel assembly 25 is positioned closer to the edge of the chassis 20 in the travel direction compared to the drive wheel assembly 24.

In some embodiments, the wheelbase between the supporting wheel assembly 25 and the drive wheel assembly 24 is smaller than the height of the load part 50. In the prior art, movable platforms 100 with a high center of gravity are prone to pitch when starting or braking in the travel direction, which can lead to the tipping of the movable platform 100. The movable platform 100 provided in this application addresses this issue by positioning the supporting wheel assembly 25 closer to the edge of the chassis 20 in the travel direction compared to the drive wheel assembly 24. Additionally, a connecting device 26 is set between the load-bearing part 27 and the supporting wheel assembly 25. When the movable platform 100 enters a variable-speed motion state in the travel direction, the rigidity between the load-bearing part 27 and the supporting wheel assembly 25 is increased by controlling the connecting device 26. This improves the overall rigidity of the movable platform 100, preventing forward pitching when the platform starts, brakes, or decelerates. This solution resolves the issue of pitch instability, ensuring smooth movement and enhancing the motion rigidity of the platform.

Optionally, the drive wheel assembly 24 includes two hub motors, which allow the drive wheel assembly 24 to achieve omnidirectional movement through differential drive. Optionally, the drive wheel assembly 24 is positioned along the central axis of the movable platform 100, ensuring that the platform can rotate in place within a preset size range without occupying external space, enabling it to rotate on the spot.

Optionally, the supporting wheel assembly 25 includes a driven wheel assembly. It is important to note that the supporting wheel assembly 25 is not limited to the installation position shown in the figure, nor is it limited to the number of wheel assemblies. Optionally, the supporting wheel assembly 25 can use a pair of caster wheels, allowing the movable platform 100 to reduce rotational resistance during in-place rotation through differential drive, facilitating its self-rotation.

It should also be noted that the travel direction can be any movement direction of the movable platform 100.

Optionally, the wheelbase between the supporting wheel assembly 25 and the drive wheel assembly 24 can be smaller than the height of the load part 50, and this can include the length or width of the chassis 20 being smaller than the height of the load part 50.

In some embodiments, the connecting device 26 is further configured to, in response to the movable platform 100 exiting the variable-speed motion state, reduce the rigidity between the load-bearing part 27 and the supporting wheel assembly 25.

In the existing technology, in some operational scenarios-such as when moving across various terrain materials like carpets, tiles, concrete surfaces, or passing through elevators, speed bumps, and gate machines with slopes and drops-movable platform 100 may have limited passability and can only navigate slopes of about 5°-7°. However, in this embodiment of the movable platform 100, when the platform is in a constant-speed motion state, the rigidity between the load-bearing part 27 and the supporting wheel assembly 25 is reduced by controlling the connecting device 26. This enables the platform to pass slopes of at least 8°, ensuring that the chassis 20's wheel assembly maintains effective ground contact on undulating surfaces and improves the shock-absorbing effect.

In some embodiments, the connecting device 26 is configured to adjust the rigidity between the load-bearing part 27 and the supporting wheel assembly 25 as follows: when the movable platform 100 is in a variable-speed motion state, the rigidity is adjusted to a first rigidity, and when the movable platform 100 is in a non-variable-speed motion state, the rigidity is adjusted to a second rigidity. In this case, the first rigidity is greater than the second rigidity.

In some embodiments, as shown in FIG. 7, the first connecting part of the connecting device 26 is used to connect to the load-bearing part 27, and the second connecting part of the connecting device 26 is used to connect to the supporting wheel assembly 25. The connecting device 26 also includes a supporting assembly 261, with the first end of the supporting assembly 261 connected to the first connecting part, and the second end of the supporting assembly 261 connected to the second connecting part. The supporting assembly 261 is configured to increase the rigidity between the first and second ends in response to the movable platform 100 entering a variable speed motion state.

In some embodiments, the supporting assembly 261 is also configured to reduce the rigidity between the first and second ends of the supporting assembly 261 in response to the movable platform 100 exiting the variable speed motion state.

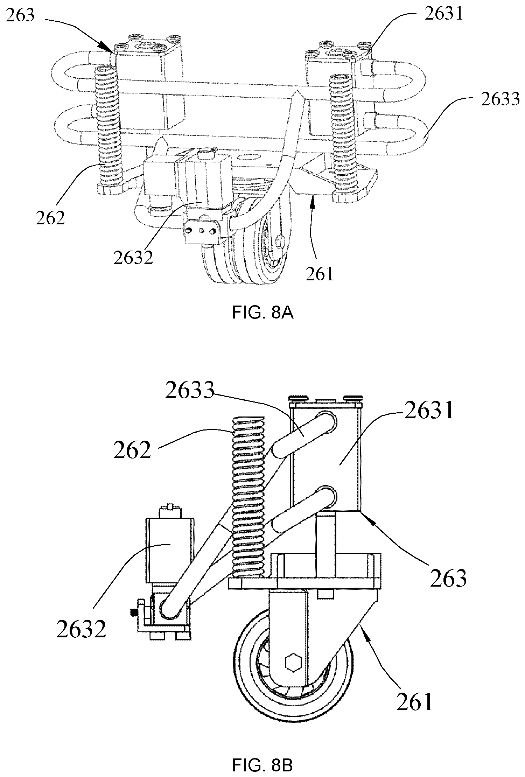

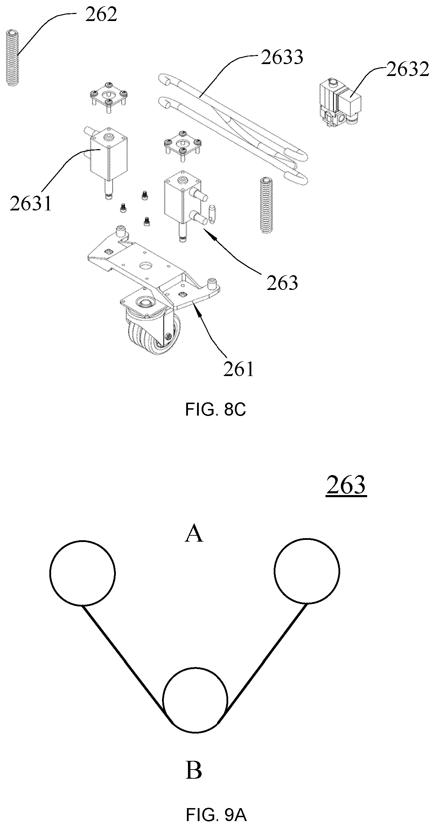

In some embodiments, as shown in FIG. 8A to 8C, the supporting assembly 261 includes an elastic member 262 and a telescopic connector 263. The first end of the elastic member 262 is connected to the first connecting part of the connecting device 26, and the second end is connected to the second connecting part of the connecting device 26. The first end of the telescopic connector 263 is connected to the first connecting part of the connecting device 26, while the second end is connected to the second connecting part of the connecting device 26. In response to the movable platform 100 entering a variable-speed motion state, the telescopic connector 263 is configured to fix the relative positional relationship between its first and second ends. This ensures that the relative position between the first connecting part, which connects to the load-bearing section 27, and the second connecting part, which connects to the supporting wheel assembly 25, remains fixed. As a result, the overall rigidity of the movable platform 100 is enhanced, preventing it from tilting forward during startup, braking, or deceleration. This addresses the issue of the movable platform 100's tendency to pitch forward, ensuring stable movement and improving motion rigidity.

Optionally, the elastic member 262 can be an elastic component capable of elongation or compression, such as a spring.

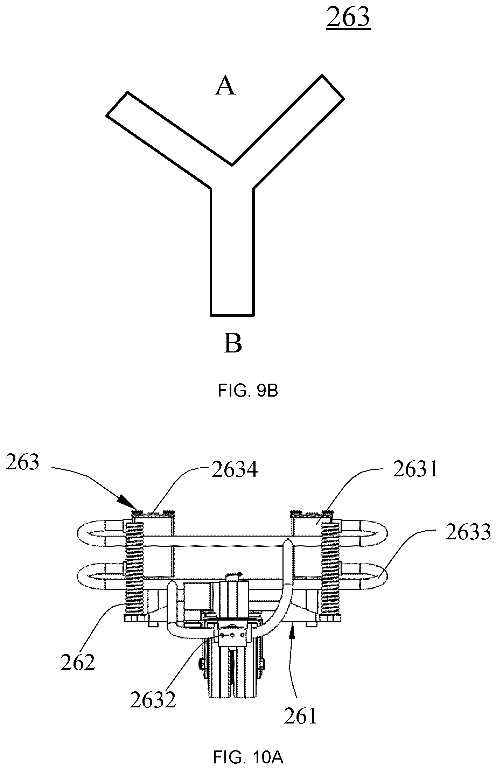

It should be noted that the telescopic connector 263 is not limited to the configurations shown in FIG. 8A to 8C. Optionally, as shown in FIG. 9A, the telescopic connector 263 may also be a transmission system in which the relative positional relationship between the first end, marked as A, and the second end, marked as B, is variable. Optionally, as shown in FIG. 9B, the telescopic connector 263 may also be a Y-shaped connecting member in which the relative positional relationship between the first end, marked as A, and the second end, marked as B, is variable.

In some embodiments, in response to the movable platform 100 exiting the variable-speed motion state, the telescopic connector 263 is configured such that the relative positional relationship between its first and second ends can change under external force. This allows the elastic member 262 to deform under external force, enabling relative movement between the first connecting part, which connects to the load-bearing section 27, and the second connecting part, which connects to the supporting wheel assembly 25. This improves the passability of the movable platform 100, ensuring that the wheel assemblies of the chassis 20 maintain effective ground contact on uneven terrain, thereby enhancing shock absorption.

In some embodiments, as shown in FIG. 8A to 8C, the telescopic connector 263 includes a fluid accommodating chamber 2631 and a valve 2632. The valve 2632 is used to control whether the fluid accommodating chamber 2631 is in communication with or sealed off from the external environment. When the valve 2632 is closed, the fluid accommodating chamber 2631 is sealed from the external environment, and the relative positional relationship between the first and second ends of the telescopic connector 263 is fixed.

In some embodiments, when the valve 2632 is open, the fluid accommodating chamber 2631 is in communication with the external environment. The fluid inside the fluid accommodating chamber 2631 can freely flow in and out in response to external forces applied to the first and/or second ends of the telescopic connector 263, allowing the relative positional relationship between the first and second ends to change under external force.

In some embodiments, the telescopic connector 263 includes multiple fluid accommodating chambers 2631, which are interconnected by a communication pipe 2633. The valve 2632 is arranged on the communication pipe 2633.

Optionally, the fluid accommodating chamber 2631 may also include a connecting rod 2634 that can move up and down.

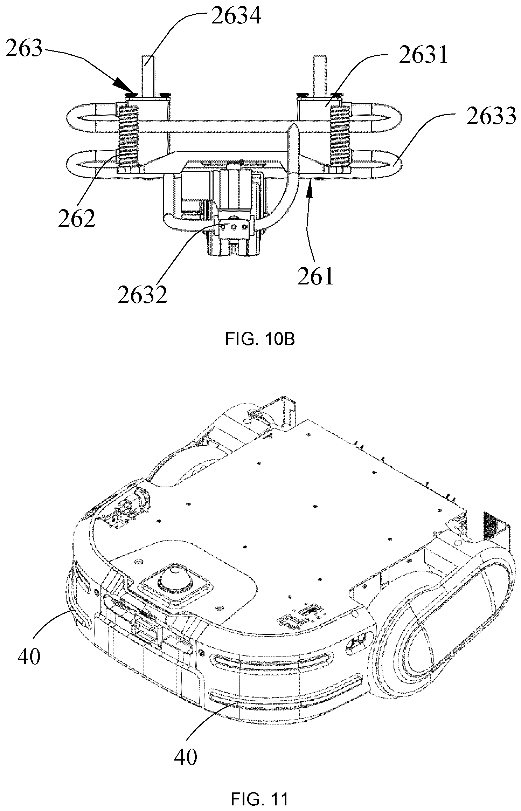

With reference to FIG. 10A and 10B, the supporting assembly 261 of the movable platform 100 in this embodiment includes an elastic member 262 and a telescopic connector 263. The elastic member 262 may be a spring. The telescopic connector 263 includes a fluid accommodating chamber 2631 and a valve 2632. The fluid accommodating chamber 2631 may be a dual-cylinder system, either pneumatic or hydraulic, connected by air pipes. The operation of the cylinders is not limited to pneumatic, hydraulic, or a hybrid of both. An electromagnetic valve is installed between the air pipes.

Taking a dual-cylinder system operating pneumatically as an example, with the pre-compression of the spring, the supporting wheel assembly 25 can maintain good ground contact when encountering obstacles. The pre-compressed spring in the pneumatic circuit resets the supporting wheel assembly 25. The pneumatic circuit is designed such that the upper air chambers of the cylinders are interconnected, and the lower air chambers are also interconnected. A normally open electromagnetic valve is used to control the airflow between the air pipes, allowing control over whether the connecting rod 2634 of the cylinder can move up and down.

As shown in FIG. 10A, the first working state of the supporting assembly 261 in the movable platform 100 provided in this embodiment is as follows:
When the movable platform 100 is in a variable-speed motion state in the traveling direction, the normally open electromagnetic valve is controlled to close, preventing the upper and lower air chambers of the cylinder from being interconnected. As a result, the upper and lower parts of the cylinder are not linked, and the high-pressure gas is essentially non-compressible. Consequently, the connecting rod 2634 of the cylinder cannot extend or retract, the spring cannot be compressed, and the supporting wheel assembly 25 cannot move up or down. This increases the rigidity of the supporting wheel assembly 25 of the movable platform 100, preventing forward tilting during startup, braking, or deceleration. This resolves the issue of the movable platform 100's pitching tendency, ensuring stable movement and enhancing motion rigidity.

As shown in FIG. 10B, the second working state of the supporting assembly 261 in the movable platform 100 provided in this embodiment is as follows:
When the movable platform 100 is in a constant-speed motion state, the normally open electromagnetic valve remains uncontrolled, keeping the air pipes connected. This allows the connecting rod 2634 of the cylinder to extend and retract freely, with the resistance being provided by the elastic force of the spring.

When the movable platform 100 encounters obstacles such as elevators, cable trenches, or speed bumps, or traverses undulating terrain, the spring can be further compressed. The supporting wheel assembly 25 of the movable platform 100 can utilize the compression and reset of the spring to enhance passability. This ensures that the wheel assemblies of the chassis 20 maintain effective ground contact on uneven surfaces, improving shock absorption performance.

Optionally, when the movable platform 100 begins braking in the forward direction, the spring of the supporting wheels may tilt forward due to the overall inertia of the movable platform 100. Therefore, when the forward velocity and forward acceleration of the movable platform 100 are detected to be in opposite directions, the supporting assembly 261 is controlled to enter the first working state, preventing vertical movement of the supporting wheel assembly 25 and avoiding compression-induced pitching. When the speed of the movable platform 100 reaches zero, the supporting assembly 261 is controlled to switch to the second working state.

When the movable platform 100 begins accelerating in the reverse direction, the acceleration may cause the entire movable platform 100 to tilt backward, leading to compression of the supporting wheel assembly 25. When the reverse velocity and reverse acceleration of the movable platform 100 are in the same direction, the supporting assembly 261 is controlled to enter the first working state. Once acceleration stabilizes to a constant speed, the supporting assembly 261 is controlled to switch to the second working state.

In some embodiments, as shown in FIG. 11, the chassis 20 further includes a contact sensor 40, which is mounted on the side surface of the chassis 20. The contact sensor 40 is configured to detect contact with other objects and generate a trigger command for controlling the emergency braking of the movable platform 100 and/or issuing an alert.

In the chassis 20 of the movable platform 100 provided in this embodiment, when an object or a person comes into contact with it, a trigger command is generated to control the emergency braking of the movable platform 100 and/or issue an alert. This ensures that the power mechanism of the movable platform 100 performs an emergency stop and/or that the platform issues a warning, preventing harm to nearby objects or pedestrians during operation or movement.

Optionally, the contact sensor 40 may include a pressure sensor. Optionally, the contact sensor 40 may be installed on the front side surface of the chassis 20 in the direction of movement. Optionally, the contact sensor 40 may be arranged at a 45-degree angle on both the left and right sides, allowing it to cover the front sides and lateral areas in the direction of movement. Optionally, the contact sensor 40 may be positioned at the outermost edge.

In an optional embodiment, the movable platform may include a drive wheel assembly and a supporting wheel assembly. Optionally, the drive wheel assembly is connected to the main motor and is used to drive the movement of the movable platform in response to motion control commands. This movement may include variable-speed motion, steering motion, and constant-speed motion. Optionally, the supporting wheel assembly is arranged in the direction of movement driven by the drive wheel assembly. For example, the supporting wheel assembly may be positioned at the front and/or rear in the direction of movement. Optionally, the supporting wheel assembly includes an idler wheel, which may be a universal wheel to better adapt to the driving control intentions of the drive wheel assembly and respond by changing direction. Optionally, the wheelbase between the supporting wheel assembly and the drive wheel assembly is smaller than the height of the movable platform. In this case, the body width of the movable platform can be relatively narrow, improving its maneuverability in confined spaces. Optionally, the drive wheel assembly and/or the supporting wheel assembly is equipped with a rigidity adjustment mechanism. This mechanism can adaptively adjust the rigidity between the wheel assembly and the body of the movable platform in response to changes in motion stability when acceleration is nonzero, thereby flexibly adjusting the platform's passability and stability. Generally, increasing the distance between wheel assemblies expands the ground contact area, enhancing the stability of the movable platform. Optionally, the drive wheel assembly and/or the supporting wheel assembly may partially or fully protrude from the exterior surface of the movable platform's body, thereby increasing the support area. Optionally, the drive wheel assembly and/or the supporting wheel assembly may be equipped with a position adjustment mechanism. This mechanism can adjust the position of the wheel assemblies relative to the platform's body. For example, the position adjustment mechanism can retract the wheels from a protruding position outside the body surface to a retracted position inside the body, reducing the overall spatial footprint of the movable platform and minimizing potential interference with other objects in the environment. For instance, if the movable platform includes an actuator that moves within a space, the position adjustment mechanism can move the wheel assemblies to avoid interfering with the actuator. This allows the actuator to access the working area occupied by the wheel assemblies when they are retracted, enabling it to perform tasks corresponding to its configuration. Optionally, the drive wheel assembly may include at least two wheel assemblies distributed on opposite first and second sides of the movable platform's body. For example, the first side may be the left side in the direction of movement, and the second side may be the right side in the direction of movement. The supporting wheel assembly may include wheel assemblies positioned at the front side of the movable platform's body, connected to the body through a rigidity adjustment mechanism. The supporting wheel assembly may also include wheel assemblies positioned at the rear side of the movable platform's body, connected to the body through a position adjustment mechanism.

The control method for the chassis of the movable platform provided in this embodiment is specifically designed to be compatible with the corresponding structure of the chassis in the aforementioned embodiments of the movable platform.

In an optional embodiment, a control method for the chassis of the movable platform is provided, where the chassis includes: a chassis body, a wheel assembly, and a control device. The chassis is used to support the actuator of the movable platform. The wheel assembly is movably connected to the chassis body. In the first working state, all or part of the wheel assembly is positioned on the outer side of the side surface of the chassis body. In the second working state, the wheel assembly is moved away from the outer side of the side surface.

The method includes: in response to a trigger command, where the trigger command is generated based on the actuator's imminent movement to the outer side of the side surface, the control device controls the wheel assembly to transition from the first working state to the second working state, allowing the actuator to move into the outer area of the chassis body.

Optionally, in the first working state, all or part of the wheel assembly protrudes outward from the side surface of the chassis body. In the second working state, the wheel assembly is retracted inward the side surface of the chassis body.

Optionally, the control device includes a telescoping mechanism, and the wheel assembly is connected to the chassis body via the telescoping mechanism. The method includes: controlling the extension or retraction of the telescoping mechanism to adjust the wheel assembly's distance from the outer area.

Optionally, the load part also includes multiple item bearing platforms arranged along the height direction. The method further includes: adjusting the position of the wheel assembly based on the weight distribution of the item on the multiple item bearing platforms, to change the wheelbase between the wheel assembly and other wheel assemblies on the chassis.

And/or,
The actuator can move up and down along the height direction. The method further includes: adjusting the position of the wheel assembly based on the height of the actuator, to change the wheelbase between the wheel assembly and other wheel assemblies on the chassis.

Optionally, other wheel assemblies are used to drive the movable platform's movement in the direction of travel. The wheel assembly is arranged in the direction of travel, near the edge of the chassis body.

Optionally, the actuator includes: a bearing part and a lifting mechanism. The bearing part protrudes outward from the load part and is used for loading and unloading item. The lifting mechanism connects the bearing part to the load part and drives the bearing part to move up and down.

The method includes: detecting the lifting position of the bearing part, and generating a trigger command when the bearing part is about to move into the outer area of the side surface.

Optionally, the chassis also includes: a load-bearing part, which is used to connect the movable platform's load part; a connecting device, which is located between the load-bearing part and a wheel assembly part. The wheel assembly or other wheel assemblies of the chassis make up the wheel assembly part.

The method further includes: controlling the connecting device to adjust the rigidity between the load-bearing part and the wheel assembly part.

Optionally, controlling the connecting device to adjust the rigidity between the load-bearing part and the wheel assembly part includes: in response to the movable platform entering a variable-speed motion state in the direction of travel, controlling the connecting device to increase the rigidity between the load-bearing part and the wheel assembly part.

Optionally, controlling the connecting device to adjust the rigidity between the load-bearing part and the wheel assembly part includes: in response to the movable platform exiting the variable-speed motion state, controlling the connecting device to decrease the rigidity between the load-bearing part and the wheel assembly part.

Optionally, the first connecting part of the connecting device is used to connect the load-bearing part, and the second connecting part of the connecting device is used to connect the wheel assembly part. The connecting device also includes a supporting assembly, where the first end of the supporting assembly is connected to the first connecting part, and the second end is connected to the second connecting part. Controlling the connecting device to adjust the rigidity between the load-bearing part and the wheel assembly part includes: adjusting the rigidity between the first and second ends of the supporting assembly to adjust the rigidity between the load-bearing part and the wheel assembly part.

Optionally, the chassis also includes a contact sensor, which is installed on the side surface of the chassis. The method further includes: based on the contact sensor detecting contact with another object, generating a trigger command to control the movable platform to perform an emergency brake and/or issue an alarm.

In an optional embodiment, a control method for the chassis of the movable platform is provided. The chassis includes: a load-bearing part, used to connect the movable platform's load part; a drive wheel assembly, capable of driving the movable platform to perform variable-speed motion in the direction of travel; a supporting wheel assembly; and a connecting device, which is located between the load-bearing part and the supporting wheel assembly.

The method includes: in response to the movable platform entering a variable-speed motion state in the direction of travel, controlling the connecting device to increase the rigidity between the load-bearing part and the supporting wheel assembly.

Optionally, the supporting wheel assembly is positioned closer to the edge of the chassis in the direction of travel than the drive wheel assembly.

Optionally, the wheelbase between the supporting wheel assembly and the drive wheel assembly is smaller than the height of the load part.

Optionally, the supporting wheel assembly includes a driven wheel.

Optionally, the method also includes: in response to the movable platform exiting the variable-speed motion state, controlling the connecting device to decrease the rigidity between the load-bearing part and the supporting wheel assembly.

Optionally, the first connecting part of the connecting device is used to connect the load-bearing part, and the second connecting part of the connecting device is used to connect the supporting wheel assembly. The connecting device also includes a supporting assembly, where the first end of the supporting assembly is connected to the first connecting part, and the second end is connected to the second connecting part.

The method includes: in response to the movable platform entering a variable-speed motion state, increasing the rigidity between the first and second ends; and/or, in response to the movable platform exiting the variable-speed motion state, decreasing the rigidity between the first and second ends.

Optionally, the supporting assembly includes: an elastic member, where the first end of the elastic member is connected to the first connecting part of the connecting device, and the second end of the elastic member is connected to the second connecting part of the connecting device; and
A telescopic connector, where the first end of the telescopic connector is connected to the first connecting part of the connecting device, and the second end of the telescopic connector is connected to the second connecting part of the connecting device.

In response to the movable platform entering a variable-speed motion state, increasing the rigidity between the first and second ends includes: in response to the movable platform entering a variable-speed motion state, configuring the telescopic connector so that the relative position between the first and second ends is fixed, so that the relative position between the first connecting part used to connect the load-bearing part and the second connecting part used to connect the supporting wheel assembly is fixed.

Optionally, the supporting assembly includes: an elastic member, where the first end of the elastic member is connected to the first connecting part of the connecting device, and the second end of the elastic member is connected to the second connecting part of the connecting device; and
A telescopic connector, where the first end of the telescopic connector is connected to the first connecting part of the connecting device, and the second end of the telescopic connector is connected to the second connecting part of the connecting device.

In response to the movable platform exiting the variable-speed motion state, decreasing the rigidity between the first and second ends includes: in response to the movable platform exiting the variable-speed motion state, configuring the telescopic connector so that the relative position between the first and second ends can change under the influence of external force, causing the elastic member to deform under the influence of external force.

Optionally, the telescopic connector includes a fluid accommodating chamber and a valve, where the valve is used to control the communication or sealing of the fluid accommodating chamber with the external cavity. When the valve is closed, the fluid accommodating chamber is sealed from the external cavity, and the relative position between the first and second ends of the telescopic connector is fixed.

Optionally, the telescopic connector includes a fluid accommodating chamber and a valve, where the valve is used to control the communication or sealing of the fluid accommodating chamber with the external cavity. When the valve is open, the fluid accommodating chamber is connected to the external cavity, and the fluid within the fluid accommodating chamber freely flows in and out of the accommodating chamber under the external force applied to the first and/or second ends of the telescopic connector, allowing the relative position between the first and second ends to change under the influence of external force.

Optionally, the telescopic connector includes multiple fluid accommodating chambers, which are interconnected by communication pipes, with the valve located on the communication pipe.

In an optional embodiment, the chassis also includes the chassis body, with the supporting wheel assembly connected to the chassis body in a movable manner. A wheel assembly control device adjusts the position of the supporting wheel assembly to switch between the first working state and the second working state. In the first working state, the supporting wheel assembly partially or fully protrudes outward from the side of the chassis body. In the second working state, the supporting wheel assembly is retracted inside the side of the chassis body.

Optionally, the chassis further includes a contact sensor installed on the side surface of the chassis. The method also includes: based on the contact sensor detecting contact with other objects, generating a trigger command to control the emergency braking of the movable platform and/or issue an alarm.

The specific principles and implementation methods of the movable platform control device provided in this embodiment are similar to those of the movable platform control method in the previous embodiments.

In an optional embodiment, a control device for the chassis of a movable platform is provided, where the chassis includes the chassis body, a wheel assembly, and a wheel assembly control device. The chassis is used to connect the movable platform's load part, which is connected to an actuator. The actuator is movable to the outer area of the chassis body. The wheel assembly is movably connected to the chassis body, and in the first working state, the wheel assembly is partially or fully located in the outer area of the chassis body. In the second working state, the wheel assembly moves away from the outer area of the chassis body.

The control device includes one or more processors, which work independently or collectively to perform the following steps: in response to a trigger command, where the trigger command is generated based on the actuator about to move to the outer area, the wheel assembly control device adjusts the wheel assembly from the first working state to the second working state to avoid the actuator.

Optionally, in the first working state, the wheel assembly is partially or fully protruding outward from the side of the chassis body, and in the second working state, the wheel assembly is retracted inside the side of the chassis body.

In an optional embodiment, the wheel assembly control device includes a telescopic mechanism, and the wheel assembly is connected to the chassis body via the telescopic mechanism.

The processor is used to execute the following: control the telescopic mechanism's extension length variation to adjust the wheel assembly away from the outer area.

Optionally, the load part may include multiple item-bearing platforms arranged along the height direction. The processor is further used to execute: based on the weight distribution of the item on the multiple item-bearing platforms, adjust the position of the wheel assembly to change the wheelbase between the wheel assembly and other wheel assemblies on the chassis; and/or,
The actuator may move along the height direction. The processor is also used to execute: based on the height of the actuator, adjust the position of the wheel assembly to change the wheelbase between the wheel assembly and other wheel assemblies on the chassis.

Optionally, the other wheel assembly is used to drive the movable platform to move in the travel direction; the wheel assembly is arranged in the travel direction, close to the edge of the chassis body.

Optionally, the actuator includes: a receiving part, a lifting mechanism; the receiving part protrudes outward from the load part and is used for loading and unloading goods; the lifting mechanism is used to connect the receiving part to the load part, and the lifting mechanism drives the receiving part up and down;
The processor is used to execute: detecting the lifting position of the receiving part, generating a trigger command when the receiving part is about to move to the outer side of the side area.

Optionally, the chassis also includes: a load-bearing part, used to connect the movable platform's load part; a connecting device, the connecting device is arranged between the load-bearing part and the wheel assembly part, the wheel assembly part includes a wheel assembly or another wheel assembly of the chassis;
The processor is also used to execute: controlling the connecting device to adjust the rigidity between the load-bearing part and the wheel assembly part.

Optionally, controlling the connecting device to adjust the rigidity between the load-bearing part and the wheel assembly part, including: in response to the movable platform entering a variable-speed motion state in the travel direction, controlling the connecting device to increase the rigidity between the load-bearing part and the wheel assembly part.

Optionally, controlling the connecting device to adjust the rigidity between the load-bearing part and the wheel assembly part, including: in response to the movable platform exiting the variable-speed motion state, controlling the connecting device to decrease the rigidity between the load-bearing part and the wheel assembly part.

Optionally, the first connecting part of the connecting device is used to connect to the load-bearing part, and the second connecting part of the connecting device is used to connect to the wheel assembly part; the connecting device also includes a supporting assembly, the first end of the supporting assembly is connected to the first connecting part, and the second end of the supporting assembly is connected to the second connecting part; controlling the connecting device to adjust the rigidity between the load-bearing part and the wheel assembly part, including: adjusting the rigidity between the first end and the second end of the supporting assembly to adjust the rigidity between the load-bearing part and the wheel assembly part.

Optionally, the chassis also includes a contact sensor, which is installed on the side surface of the chassis; the processor is also used to execute: based on the contact sensor detecting contact with other objects, generating a trigger command to control the movable platform's emergency braking and/or issue an alert.

In one optional embodiment, a control device for the chassis of a movable platform is provided, where the chassis includes: a load-bearing part, used to connect the movable platform's load part; a drive wheel assembly, capable of driving the movable platform to perform variable-speed motion in the travel direction; a supporting wheel assembly, which is located closer to the edge of the chassis in the travel direction compared to the drive wheel assembly, and the wheelbase between the supporting wheel assembly and the drive wheel assembly is smaller than the height of the item load; a connecting device, which is arranged between the load-bearing part and the supporting wheel assembly.

One or more processors, working individually or together, are used to execute the following steps: in response to the movable platform entering a variable-speed motion state in the travel direction, controlling the connecting device to increase the rigidity between the load-bearing part and the supporting wheel assembly.

Optionally, the processor is also used to execute: in response to the movable platform exiting the variable-speed motion state, controlling the connecting device to decrease the rigidity between the load-bearing part and the supporting wheel assembly.

Optionally, the first connecting part of the connecting device is used to connect to the load-bearing part, and the second connecting part of the connecting device is used to connect to the supporting wheel assembly; the connecting device also includes a supporting assembly, the first end of the supporting assembly is connected to the first connecting part, and the second end of the supporting assembly is connected to the second connecting part; increasing the rigidity between the load-bearing part and the supporting wheel assembly includes: increasing the rigidity between the first end and the second end of the supporting assembly.

Optionally, the first connecting part of the connecting device is used to connect to the load-bearing part, and the second connecting part of the connecting device is used to connect to the supporting wheel assembly; the connecting device also includes a supporting assembly, the first end of the supporting assembly is connected to the first connecting part, and the second end of the supporting assembly is connected to the second connecting part; decreasing the rigidity between the load-bearing part and the supporting wheel assembly includes:
decreasing the rigidity between the first end and the second end of the supporting assembly.

Optionally, the supporting assembly includes: an elastic member, the first end of the elastic member is connected to the first connecting part of the connecting device, and the second end of the elastic member is connected to the second connecting part of the connecting device; a telescopic connector, the first end of the telescopic connector is connected to the first connecting part of the connecting device, and the second end of the telescopic connector is connected to the second connecting part of the connecting device; increasing the rigidity between the first end and the second end of the supporting assembly includes: in response to the movable platform entering the variable-speed motion state, the telescopic connector is configured to fix the relative positional relationship between the first and second ends, so that the relative position between the first connecting part, which connects to the load-bearing part, and the second connecting part, which connects to the supporting wheel assembly, is fixed.

Optionally, the supporting assembly includes: an elastic member, the first end of the elastic member is connected to the first connecting part of the connecting device, and the second end of the elastic member is connected to the second connecting part of the connecting device; a telescopic connector, the first end of the telescopic connector is connected to the first connecting part of the connecting device, and the second end of the telescopic connector is connected to the second connecting part of the connecting device; decreasing the rigidity between the first end and the second end of the supporting assembly includes: in response to the movable platform exiting the variable-speed motion state, the telescopic connector is configured to allow the relative positional relationship between the first and second ends to change under external force, so that the elastic member deforms under the external force, and the first connecting part, which connects to the load-bearing part, and the second connecting part, which connects to the supporting wheel assembly, are capable of relative movement.

Optionally, the telescopic connector includes a fluid accommodating chamber and a valve, the valve is used to control the communication or sealing of the fluid accommodating chamber with the external cavity; increasing the rigidity between the first and second ends of the supporting assembly includes: controlling the valve to close, sealing the fluid accommodating chamber from the external cavity, fixing the relative positional relationship between the first and second ends of the telescopic connector.

Optionally, the telescopic connector includes a fluid accommodating chamber and a valve, the valve is used to control the communication or sealing of the fluid accommodating chamber with the external cavity; decreasing the rigidity between the first and second ends of the supporting assembly includes: controlling the valve to open, allowing the fluid accommodating chamber to communicate with the external cavity, the fluid inside the fluid accommodating chamber flows freely in and out under the external force applied to the first and/or second ends of the telescopic connector, and the relative positional relationship between the first and second ends of the telescopic connector can change under the effect of external force.

Optionally, the telescopic connector includes multiple fluid accommodating chambers, which are connected by communication pipes, with valves installed on the communication pipes.

Optionally, the chassis also includes a chassis body, with the supporting wheel assembly movably connected to the chassis body; the processor is also used to execute: controlling the wheel assembly control device to adjust the position of the supporting wheel assembly, so that the wheel assembly switches between the first working state and the second working state; where, in the first working state, the supporting wheel assembly protrudes outward from the side of the chassis body, either fully or partially; in the second working state, the supporting wheel assembly is housed on the inner side of the side surface of the chassis body.

Optionally, the chassis also includes a contact sensor, which is installed on the side surface of the chassis; the processor is also used to execute: based on the contact sensor detecting contact with other objects, generating a trigger command to control the movable platform's emergency braking and/or issue an alert.

Some embodiments of the present application also provide a movable platform, which includes a chassis or control device according to any of the embodiments described above in this specification.

The embodiment of the present application also provides a computer-readable storage medium, where the computer-readable storage medium stores a computer program. When the computer program is executed by the processor, it enables the processor to implement the steps of the control method for the chassis of the movable platform as provided by the above embodiments.

The computer-readable storage medium may be an internal storage unit of the movable platform's chassis as described in any of the previous embodiments, such as the hard disk or memory of the movable platform's chassis. The computer-readable storage medium may also be an external storage device of the movable platform's chassis, such as a plug-in hard drive, a Smart Media Card (SMC), a Secure Digital (SD) card, a Flash Card, and so on.

It should be understood that the terms used in this application are for the purpose of describing specific embodiments and are not intended to limit the scope of the application.

It should also be understood that the term "and/or" used in this application and the appended claims refers to any combination of one or more of the items listed and all possible combinations, and includes these combinations.

The above is merely some specific embodiments of the present application, but the scope of protection of the present application is not limited to this. Any person skilled in the relevant technical field, within the technical scope disclosed in this application, can easily think of various equivalent modifications or substitutions, and these modifications or substitutions should be covered within the scope of protection of this application. Therefore, the scope of protection of this application should be defined by the scope of the claims.

## Claims

1. A movable platform, **characterized by** comprising:
a body, a wheel assembly, a control device, and an actuator, wherein
the actuator and the wheel assembly are movably connected to the body;
the wheel assembly is configured to roll and operate in a target area at a bottom of the body;
the control device is configured to respond to a trigger command, controlling the wheel assembly to exit the target area and controlling the actuator to enter the target area.

2. The movable platform according to claim 1, **characterized in that** the control device is configured to, in response to the actuator exiting the target area, control the wheel assembly to enter the target area.

3. The movable platform according to claim 1, **characterized in that** the movable platform comprises another wheel assembly;
when the wheel assembly is located in the target area, a wheelbase between the wheel assembly and the another wheel assembly is greater than a wheelbase between the wheel assembly and another wheel assembly when the wheel assembly exits the target area.

4. The movable platform according to claim 3, **characterized in that** the another wheel assembly is a drive wheel, and the wheel assembly is a driven wheel.

5. The movable platform according to claim 3 or 4, **characterized in that** a rotational axis of the another wheel assembly is located closer to a projection position of a center of gravity of the movable platform on a bottom surface of the body compared to a rotational axis of the wheel assembly.

6. The movable platform according to claim 3 or 4, **characterized in that** the another wheel assembly comprises a first wheel assembly and a second wheel assembly, which are respectively located on both sides of the body, and the wheel assembly comprises a third wheel assembly, with the third wheel assembly located on an extended line of a center normal of a rotational axis between the first wheel assembly and the second wheel assembly.

7. The movable platform according to claim 1, **characterized in that** the target area comprises an outer surrounding area of the bottom of the body.

8. The movable platform according to claim 1, **characterized in that** the controlling of the wheel assembly to exit the target area comprises: controlling the wheel assembly to move inward a side surface of the bottom of the body.

9. The movable platform according to claim 8, **characterized in that** the wheel assembly is connected to the body via a telescopic mechanism, and the control device is configured to control a telescopic length change of the telescopic mechanism to drive the wheel assembly to move inward the side surface of the bottom of the body.

10. The movable platform according to claim 1, **characterized in that** the actuator is movable along the body from top to bottom toward the target area.

11. The movable platform according to claim 1, **characterized in that** the body comprises a storage compartment, and the actuator is configured to take out an item placed in the storage compartment and move the item carried to the target area.

12. The movable platform according to claim 1, **characterized in that** the wheel assembly and/or another wheel assembly of the movable platform is connected to the body via a connecting device;
the control device is used to control the connecting device to adjust a rigidity between the wheel assembly and/or the another wheel assembly of the movable platform and the body.

13. The movable platform according to claim 12, **characterized in that**, in response to the movable platform entering a variable speed motion state, the control device controls the connecting device to increase the rigidity between the wheel assembly and/or the another wheel assembly of the movable platform and the body; and/or,
in response to the movable platform exiting the variable speed motion state, the control device controls the connecting device to decrease the rigidity between the wheel assembly and/or the another wheel assembly of the movable platform and the body.

14. A chassis of a movable platform, **characterized by** comprising:
a chassis body, a wheel assembly, and a wheel assembly control device, wherein
the chassis body is configured to support an actuator of the movable platform;
the wheel assembly is movably connected to the chassis body, in a first working state, all or part of the wheel assembly is located in an outer area of a side surface of the chassis body, in a second working state, the wheel assembly is away from the outer area of the side surface;
the wheel assembly control device is configured to, in response to a trigger command, control the wheel assembly to move from the first working state to the second working state, so that the actuator moves to the outer area.

15. The chassis according to claim 14, **characterized in that**, in the first working state, all or part of the wheel assembly protrudes outward from the side surface of the chassis body, and in the second working state, the wheel assembly is retracted inward the side surface the chassis body.

16. The chassis according to claim 14, **characterized in that** the wheel assembly control device comprises a telescopic mechanism, and the wheel assembly is connected to the chassis body via the telescopic mechanism;
the wheel assembly control device is configured to control a telescopic length change of the telescopic mechanism to adjust the wheel assembly away from the outer area.

17. The chassis according to claim 14, **characterized in that** the movable platform comprises a load part, and the load part is connected to the actuator;
the load part further comprises a plurality of item-bearing platforms arranged along a height direction;
the wheel assembly control device is further configured to adjust a position of the wheel assembly based on a weight distribution of a item(s) on the plurality of item-bearing platforms, to change a wheelbase between the wheel assembly and another wheel assembly of the chassis;
and/or,
the actuator is movable along the height direction;
the wheel assembly control device is further configured to adjust the position of the wheel assembly based on a height of the actuator to change a wheelbase between the wheel assembly and another wheel assembly of the chassis.

18. The chassis according to claim 14, **characterized in that** the another wheel assembly is configured to drive the movable platform to move in a traveling direction;
the wheel assembly is located in the traveling direction, near an edge of the chassis body.

19. The chassis according to any one of claims 14-18, **characterized in that** the actuator comprises: a receiving part and a lifting mechanism;
the receiving part protrudes outward from the load part and is configured to load and unload an item;
the lifting mechanism is configured to connect the receiving part to the load part and drive the receiving part to lift.

20. The chassis according to claim 14, **characterized in that** the chassis further comprises:
a load-bearing part, configured to connect the load part of the movable platform;
a connecting device, wherein the connecting device is located between the load-bearing part and a wheel assembly part, the wheel assembly part comprises the wheel assembly or another wheel assembly of the chassis, and the connecting device is configured to adjust the rigidity between the load-bearing part and the wheel assembly part.

21. The chassis according to claim 20, **characterized in that** the connecting device is configured to, in response to the movable platform entering a variable-speed motion state in a traveling direction, increase the rigidity between the load-bearing part and the wheel assembly part.

22. The chassis according to claim 20, **characterized in that** the connecting device is configured to, in response to the movable platform exiting a variable-speed motion state, decrease the rigidity between the load-bearing part and the wheel assembly part.

23. The chassis according to any one of claims 20-22, **characterized in that** a first connecting part of the connecting device is configured to connect the load-bearing part, and a second connecting part of the connecting device is configured to connect the wheel assembly part;
the connecting device further comprises a supporting assembly, a first end of the supporting assembly is connected to the first connecting part, and a second end of the supporting assembly is connected to the second connecting part; and
the supporting assembly is configured to adjust the rigidity between the first end and the second end.

24. The chassis according to claim 14, **characterized in that** the chassis further comprises a contact sensor, the contact sensor is mounted on a side surface of the chassis;
the contact sensor is configured to sense contact with another object and generate a trigger command for controlling emergency braking of the movable platform and/or issuing an alarm.

25. A control method for a chassis of a movable platform, **characterized in that** the chassis comprises:
a chassis body, a wheel assembly, and a wheel assembly control device;
the chassis is configured to support an actuator of the movable platform;
the wheel assembly is movably connected to the chassis body, in a first working state, all or part of the wheel assembly is located in an outer area of a side surface of the chassis body, in a second working state, the wheel assembly is away from the outer area of the side surface;
the method comprises:
in response to a trigger command, wherein the trigger command is generated based on the actuator about to move to the outer area of the side surface, the wheel assembly control device controlling the wheel assembly to move from the first working state to the second working state, so as to allow the actuator to enter the outer area of the side surface.

26. The control method according to claim 25, **characterized in that**, in the first working state, all or part of the wheel assembly protrudes outward from the side surface of the chassis body, and in the second working state, the wheel assembly is retracted inward the side surface of the chassis body.

27. The control method according to claim 25, **characterized in that** the wheel assembly control device comprises a telescopic mechanism, and the wheel assembly is connected to the chassis body via the telescopic mechanism; the method comprises:
controlling the telescopic mechanism to adjust a telescopic length to move the wheel assembly away from the outer area.

28. The control method according to claim 25, **characterized in that** a load part further comprises a plurality of item-bearing platforms arranged along a height direction; the method further comprises:
adjusting a position of the wheel assembly based on a weight distribution of an item on the plurality of item-bearing platforms, to change a wheelbase between the wheel assembly and another wheel assembly of the chassis;
and/or,
the actuator being capable of moving up and down along the height direction;
the method further comprises:
adjusting the position of the wheel assembly based on a height of the actuator, to change the wheelbase between the wheel assembly and the another wheel assembly of the chassis.

29. The control method according to claim 25, **characterized in that** another wheel assembly is configured to drive the movable platform to move in a traveling direction;
the wheel assembly is arranged in the traveling direction and close to an edge of the chassis body.

30. The control method according to any one of claims 25-29, **characterized in that** the actuator comprises: a receiving part and a lifting mechanism;
the receiving part protrudes outward from a load part and is configured to load and unload an item;
the lifting mechanism is configured to connect the receiving part to the load part, and the lifting mechanism drives the receiving part to move up and down;
the method comprises:
detecting a lifting position of the receiving part, and generating a trigger command when the receiving part is about to move to the outer area of the side surface.

31. The control method according to claim 25, **characterized in that** the chassis further comprises:
a load-bearing part, configured to connect a load part of the movable platform;
a connecting device, arranged between the load-bearing part and a wheel assembly part, the wheel assembly part comprising the wheel assembly or another wheel assembly of the chassis;
the method further comprises:
controlling the connecting device to adjust a rigidity between the load-bearing part and the wheel assembly part.

32. The control method according to claim 31, **characterized in that** the controlling of the connecting device to adjust the rigidity between the load-bearing part and the wheel assembly part comprises:
in response to the movable platform entering a variable-speed motion state in a traveling direction, controlling the connecting device to increase the rigidity between the load-bearing part and the wheel assembly part.

33. The control method according to claim 32, **characterized in that** the controlling of the connecting device to adjust the rigidity between the load-bearing part and the wheel assembly part comprises:
in response to the movable platform exiting the variable-speed motion state, controlling the connecting device to decrease the rigidity between the load-bearing part and the wheel assembly part.

34. The control method according to any one of claims 31-33, **characterized in that** a first connecting part of the connecting device is configured to connect the load-bearing part, and a second connecting part of the connecting device is configured to connect the wheel assembly part;
the connecting device further comprises a supporting assembly, a first end of the supporting assembly is connected to the first connecting part, a second end of the supporting assembly is connected to the second connecting part;
the controlling of the connecting device to adjust the rigidity between the load-bearing part and the wheel assembly part comprises:
adjusting the rigidity between the first end and the second end of the supporting assembly to adjust the rigidity between the load-bearing part and the wheel assembly part.

35. The control method according to claim 25, **characterized in that** the chassis further comprises a contact sensor mounted on a side surface of the chassis;
the method further comprises:
generating a trigger command to control emergency braking of the movable platform and/or issue an alarm based on the contact sensor sensing contact with another object.

36. A chassis of a movable platform, **characterized in that** the chassis comprises:
a load-bearing part, configured to connect a load part of the movable platform;
a drive wheel assembly, capable of driving the movable platform to perform a variable-speed motion in a traveling direction;
a supporting wheel assembly;
a connecting device, arranged between the load-bearing part and the supporting wheel assembly;
the connecting device is configured to, in response to the movable platform entering a variable-speed motion state in the traveling direction, increase a rigidity between the load-bearing part and the supporting wheel assembly.

37. The chassis according to claim 36, **characterized in that** the supporting wheel assembly is positioned closer to an edge of the chassis in the traveling direction than the drive wheel assembly.

38. The chassis according to claim 36, **characterized in that** a wheelbase between the supporting wheel assembly and the drive wheel assembly is smaller than a height of the load part.

39. The chassis according to claim 36, **characterized in that** the supporting wheel assembly comprises a driven wheel.

40. The chassis according to claim 36, **characterized in that** the connecting device is further configured to, in response to the movable platform exiting the variable-speed motion state, reduce the rigidity between the load-bearing part and the supporting wheel assembly.

41. The chassis according to claim 36, **characterized in that** a first connecting part of the connecting device is configured to connect the load-bearing part, a second connecting part of the connecting device is configured to connect the supporting wheel assembly;
the connecting device further comprises a supporting assembly, the first end of the supporting assembly is connected to the first connecting part, the second end of the supporting assembly is connected to the second connecting part;
the supporting assembly is configured to, in response to the movable platform entering a variable-speed motion state, increase the rigidity between the first end and the second end; and/or
the supporting assembly is configured to, in response to the movable platform exiting the variable-speed motion state, decrease the rigidity between the first end and the second end.

42. The chassis according to claim 41, **characterized in that** the supporting assembly comprises:
an elastic member, a first end of the elastic member being connected to the first connecting part of the connecting device, a second end of the elastic member being connected to the second connecting part of the connecting device;
a telescopic connector, a first end of the telescopic connector being connected to the first connecting part of the connecting device, a second end of the telescopic connector being connected to the second connecting part of the connecting device;
the telescopic connector is configured to, in response to the movable platform entering the variable-speed motion state, have a fixed relative positional relationship between the first end and the second end, so that a relative position between the first connecting part connecting the load-bearing part and the second connecting part connecting the supporting wheel assembly is fixed.

43. The chassis according to claim 41, **characterized in that** the supporting assembly comprises:
an elastic member, a first end of the elastic member being connected to the first connecting part of the connecting device, a second end of the elastic member being connected to the second connecting part of the connecting device;
a telescopic connector, a first end of the telescopic connector being connected to the first connecting part of the connecting device, a second end of the telescopic connector being connected to the second connecting part of the connecting device;
in response to the movable platform exiting the variable-speed motion state, the telescopic connector is configured such that a relative positional relationship between the first and second ends is changeable under an action of an external force, so that the elastic member undergoes deformation under the action of the external force.

44. The chassis according to claim 42, **characterized in that** the telescopic connector comprises a fluid accommodating chamber and a valve, the valve being configured to control communication or sealing between the fluid accommodating chamber and outside;
when the valve is closed, the fluid accommodating chamber is sealed from the outside, and the relative positional relationship between the first and second ends of the telescopic connector is fixed.

45. The chassis according to claim 43, **characterized in that** the telescopic connector comprises a fluid accommodating chamber and a valve, the valve being configured to control communication or sealing between the fluid accommodating chamber and outside;
when the valve is open, the fluid accommodating chamber is in communication with the outside, and a fluid inside the fluid accommodating chamber freely flows in and out of the accommodating chamber in response to an external force applied to the first and/or second end of the telescopic connector, allowing the relative positional relationship between the first and second ends of the telescopic connector to change under an action of the external force.

46. The chassis according to claim 44 or 45, **characterized in that** the telescopic connector comprises a plurality of fluid accommodating chambers, the plurality of fluid accommodating chambers is interconnected by a communication pipe, and the valve is arranged on the communication pipe.

47. The chassis according to claim 36, **characterized in that** the chassis further comprises a chassis body, and the supporting wheel assembly is movably connected to the chassis body;
a wheel assembly control device is further used to adjust a position of the supporting wheel assembly, so that the wheel assembly switches between a first working state and a second working state, wherein
in the first working state, the supporting wheel assembly is at least partially protruding outward from a side surface of the chassis body; in the second working state, the supporting wheel assembly is retracted inward the side surface of the chassis body.

48. The chassis according to claim 36, **characterized in that** the chassis further comprises a contact sensor mounted on a side surface of the chassis;
the contact sensor is configured to sense contact with another object and generate a trigger command to control emergency braking of the movable platform and/or issue an alarm.

49. A control method for a chassis of a movable platform, **characterized in that** the chassis comprises:
a load-bearing part, configured to connect a load part of the movable platform;
a drive wheel assembly, capable of driving the movable platform to perform a variable-speed motion in a traveling direction;
a supporting wheel assembly;
a connecting device, arranged between the load-bearing part and the supporting wheel assembly;
the method comprises:
in response to the movable platform entering a variable-speed motion state in the traveling direction, controlling the connecting device to increase a rigidity between the load-bearing part and the supporting wheel assembly.

50. The control method according to claim 49, **characterized in that** the supporting wheel assembly is positioned closer to an edge of the chassis in the traveling direction than the drive wheel assembly.

51. The control method according to claim 49, **characterized in that** a wheelbase between the supporting wheel assembly and the drive wheel assembly is smaller than a height of the load part.

52. The control method according to claim 49, **characterized in that** the supporting wheel assembly comprises a driven wheel.

53. The control method according to claim 49, **characterized in that** the method further comprises:
in response to the movable platform exiting the variable-speed motion state, controlling the connecting device to reduce the rigidity between the load-bearing part and the supporting wheel assembly.

54. The control method according to claim 49, **characterized in that** a first connecting part of the connecting device is configured to connect the load-bearing part, a second connecting part of the connecting device is configured to connect the supporting wheel assembly;
the connecting device further comprises a supporting assembly, the first end of the supporting assembly is connected to the first connecting part, the second end of the supporting assembly is connected to the second connecting part;
the method comprises:
in response to the movable platform entering a variable-speed motion state, increasing the rigidity between the first end and the second end; and/or
in response to the movable platform exiting the variable-speed motion state, decreasing the rigidity between the first end and the second end.

55. The control method according to claim 54, **characterized in that** the supporting assembly comprises:
an elastic member, a first end of the elastic member being connected to the first connecting part of the connecting device, a second end of the elastic member being connected to the second connecting part of the connecting device;
a telescopic connector, a first end of the telescopic connector being connected to the first connecting part of the connecting device, a second end of the telescopic connector being connected to the second connecting part of the connecting device;
the in response to the movable platform entering a variable-speed motion state, increasing the rigidity between the first end and the second end comprises;
in response to the movable platform entering the variable-speed motion state, making the telescopic connector have a fixed relative positional relationship between the first end and the second end, so that a relative position between the first connecting part connecting the load-bearing part and the second connecting part connecting the supporting wheel assembly is fixed.

56. The control method according to claim 54, **characterized in that** the supporting assembly comprises:
an elastic member, a first end of the elastic member being connected to the first connecting part of the connecting device, a second end of the elastic member being connected to the second connecting part of the connecting device;
a telescopic connector, a first end of the telescopic connector being connected to the first connecting part of the connecting device, a second end of the telescopic connector being connected to the second connecting part of the connecting device;
the in response to the movable platform exiting the variable-speed motion state, the decreasing the rigidity between the first end and the second end comprises:
in response to the movable platform exiting the variable-speed motion state, making a relative positional relationship between the first and second ends changeable under an action of an external force, so that the elastic member undergoes deformation under the action of the external force.

57. The control method according to claim 55, **characterized in that** the telescopic connector comprises a fluid accommodating chamber and a valve, the valve being configured to control communication or sealing between the fluid accommodating chamber and outside;
when the valve is closed, the fluid accommodating chamber is sealed from the outside, and the relative positional relationship between the first and second ends of the telescopic connector is fixed.

58. The control method according to claim 56, **characterized in that** the telescopic connector comprises a fluid accommodating chamber and a valve, the valve being configured to control communication or sealing between the fluid accommodating chamber and outside;
when the valve is open, the fluid accommodating chamber is in communication with the outside, and a fluid inside the fluid accommodating chamber freely flows in and out of the accommodating chamber in response to an external force applied to the first and/or second end of the telescopic connector, allowing the relative positional relationship between the first and second ends of the telescopic connector to change under an action of the external force.

59. The control method according to claim 57 or 58, **characterized in that** the telescopic connector comprises a plurality of fluid accommodating chambers, the plurality of fluid accommodating chambers is interconnected by a communication pipe, and the valve is arranged on the communication pipe.

60. The control method according to claim 49, **characterized in that** the chassis further comprises a chassis body, and the supporting wheel assembly is movably connected to the chassis body;
a wheel assembly control device is further used to adjust a position of the supporting wheel assembly, so that the wheel assembly switches between a first working state and a second working state, wherein
in the first working state, the supporting wheel assembly is at least partially protruding outward from a side surface of the chassis body; in the second working state, the supporting wheel assembly is retracted inward the side surface of the chassis body.

61. The control method according to claim 49, **characterized in that** the chassis further comprises a contact sensor mounted on a side surface of the chassis;
the method further comprises: based on sensing contact with another object, generating a trigger command to control emergency braking of the movable platform and/or issue an alarm.

62. A movable platform, **characterized by** comprising the chassis according to any one of claims 14 to 24 and 36 to 48.

63. A computer-readable storage medium, **characterized in that** the computer-readable storage medium stores a computer program, which, when executed by a processor, implements the steps of the control method according to any one of claims 25 to 35 and 49 to 61.
